# EUROPEAN PATENT SPECIFICATION

(11) **EP 4 264 220 B1**
(45) Date of publication and mention of the grant of the patent: **12.11.2025**
(21) Application number: 21819607.9
(22) Date of filing: 30.11.2021
(51) Int. Cl.: G01M 3/28, F17D 5/02, F04C 28/02, F04C 28/24

(54) **METHOD FOR ASSESSING A CONDITION OF A PNEUMATIC NETWORK**
VERFAHREN ZUR BEURTEILUNG EINES ZUSTANDS EINES PNEUMATISCHEN NETZWERKS
PROCÉDÉ D'ÉVALUATION D'UN ÉTAT DE RÉSEAU PNEUMATIQUE

(30) Priority: 16.12.2020 BE 202005939
(43) Date of publication of application: 25.10.2023
(60) Divisional application: 25205807.8
(73) Proprietor: ATLAS COPCO AIRPOWER, naamloze vennootschap, 2610 Wilrijk (BE)
(72) Inventor: DE VOS, Filip, 2610 Wilrijk (BE); PEPERMANS, Manu, 2610 Wilrijk (BE); LOUARROUDI, Ebrahim, 2610 Wilrijk (BE); GEUENS, Philippe, 2610 Wilrijk (BE)
(74) Representative: Van Minnebruggen, Ewan Benito Agnes
(86) International application number: PCT/IB2021/061128
(87) International publication number: WO 2022/130083

(56) References cited:
- WO-A1-2007/128657
- WO-A1-2009/158602
- WO-A2-2013/155136
- WO-A2-2013/155140
- DE-A1- 102008 064 490
- US-B1- 9 599 531

## Description

### Technical field

The present invention is situated in the field of compressors for compressing and supplying a gas to a pneumatic network, and more particularly in assessing a condition of such a pneumatic network.

### State of the art

Compressors are known to be used to compress gas in one or more stages. This compressed gas is supplied to one or more pneumatic consumers through a pneumatic network.

In a simple form, the pneumatic network consists of a compressor to which a consumer is connected. However, in a real industrial environment, the pneumatic network consists of, on the one hand, a group of compressors arranged in a technical room, also called the compressor room, and on the other hand, a group of consumers dispersed over the industrial site. In addition, other components may also be present in the network, such as compressed air vessels, shut-off valves, filters, regulators, and/or lubrication systems.

The compressor room, and more specifically the number and respective capacities of the compressors, are selected based on an expected consumption on the site, optionally increased by an expected or estimated future expansion margin. Furthermore, a choice of compressor will be made as a function of the intended applications. The choice of compressors includes, for example, screw compressors versus turbo compressors, oilinjected versus oil-free compressors.

Normally, the compressed air consumers are located at a different location from the compressor room. In many cases, a consumer will therefore use the pneumatic network without having to have any insight into where the compressor room is located, nor what the technical specifications thereof are.

However, the consumer expects to be able to continuously consume compressed air - or another gas - at all times with pre-specified medium properties for his specific application, such as a desired pressure, flow rate, humidity, oil concentration, and so on. On the other hand, a pneumatic network operator, or more generally the industrial site operator, will try to manage the pneumatic network efficiently and/or performantly in terms of energy consumption and related economic costs.

Therefore, in order to manage the pneumatic network efficiently and/or performantly, there is a need for a method and associated system to assess the condition of the network.

An existing solution is, on the one hand, to place pressure gauges at certain points in the network and, on the other hand, to measure them manually. An overview of the pressures present can then be drawn up in order to assess the condition of the network. Furthermore, in addition to pressure gauges, other sensors describing the condition of the network may also be used, such as, for example, a thermometer, a humidity meter, a flow meter, or the like.

This method can also be automated, such as, for example, disclosed in US9395262B1. Herein, a subsystem of the pneumatic network is monitored in order to be able to detect leaks. Use is made of historical data wherein a difference between measured data and historical data may indicate the presence of a leak. The historical data will usually consist of measured data wherein the pneumatic network does not contain leaks.

A disadvantage of the above solutions is that the initiation is very time consuming. Furthermore, it must be ensured with great certainty that the initial data does correspond to data from a leak-free pneumatic network. Moreover, a trend will only be noticed after some time, while preferably a possible deviation should be detected in time.

DE102008064490A1 relates to a method for controlling a compressor installation which comprises a plurality of compressors, wherein the aim is to maintain a predetermined overpressure by means of the compressor installation.

Accordingly, there is a need for a method and an apparatus to manage a pneumatic network more effectively by assessing the condition of a pneumatic network more accurately.

### Summary of the invention

It is an object of the present invention to provide a method and apparatus for managing a pneumatic network efficiently and/or performantly.

This object is achieved, according to a first aspect of the invention, by providing a method for assessing a condition of a pneumatic network comprising at least one compressor configured to compress a gas, and at least one pneumatic consumer, the method comprising the steps of:
- detecting one or more parameters and associated context information of the gas at at least two different locations of the pneumatic network and at two different points in time; and
- synchronizing the detection at a first and second point in time, respectively, thereby obtaining a first and second momentarily recording, respectively, of the pneumatic network; and
- assessing the condition of the pneumatic network based on the first and the second
momentarily recording
- detecting the one or more parameters and associated context information over a predefined time horizon comprising a series of momentarily recordings;
- generating a data set comprising the sequence of momentarily recordings and wherein the assessment is further done based on the data set.

The pneumatic network consists of at least one compressor and at least one consumer, but will generally consist of a group of compressors and a group of consumers. The consumers consume the compressed gas at a location different from that of the compressors.

The pneumatic network further comprises a group of sensors configured to detect or observe parameters characteristic for the gas. These parameters are, for example, a pressure, flow rate, flow density, dew point, humidity, and/or temperature. In addition, context information will also be retrieved along with the parameters. This context information, also called meta data, is a further description of a relationship between the measured parameters and the environment of the pneumatic network. This includes, among others: a point in time in a day or a week, legal holidays, geolocation, weather conditions, production planning, loading percentage of the compressor, position of the sensor in the pneumatic network, and/or operational status of the network and/or the pneumatic consumers, the sensor, and/or the compressor.

At at least two physically different locations, these one or more parameters are observed together with the context information. In addition, the observation is done at different points in time, wherein it is important to note that the observations are synchronized. In other words, at a first point in time one or more parameters with the context information are simultaneously detected at at least two different locations. A period of time later, the parameters with the context information are again simultaneously observed at the same locations. In this way, a momentarily recording or 'snapshot' of the pneumatic network at two different points in times is achieved.

Detection can be done by means of digital meters, or analog meters with an analog to digital converter, wherein the synchronization of the observations may then be done by using time stamps in the registered packets. The digital meters must be initially synchronized, that is, the internal clocks of the meters are synchronized.

The digital meters may furthermore be of the wireless type, wherein a central processing unit may process the observations.

The two - or preferably several - momentarily recordings or snapshots are then used to assess the condition of the pneumatic network. This assessment is done by comparing the snapshots, preferably obtained within the same context, over time. For example, when a significant difference between two successive snapshots is observed, wherein the time difference between these snapshots is small, a possible anomaly in the network can be inferred. In other words, an anomaly detection consists of a combination of synchronized parameters together with the context information.

The assessment is thus carried out, on the one hand, by comparing the two snapshots with each other, but also, according to the invention, by a data set comprising a series of snapshots over a predefined time horizon. The time horizon is, for example, a day, a work week, a month, or any other period of time that is characteristic of a use of the pneumatic network with regard to the applications used.

An advantage of the invention is that no initiation period is required. In other words, by the mere installation of at least two sensors in the pneumatic network, the assessment thereof can be started immediately. The choice of the locations of the sensors will determine the accuracy of the assessment, but it should be understood that this does not limit the invention. In other words, an operator of the pneumatic network may opt to place the at least two sensors in one part of the network to only assess this part. This can be advantageous if, for example, only this part requires the necessary monitoring.

Another advantage is that there is also no need to have any initial knowledge of the pneumatic network. By using both the parameters and the context information, a sufficient assessment can already be made based thereon, which may be useful for striving for a further efficient and/or performant operation of the pneumatic network.

Another advantage is that, in contrast to the prior art, the focus is not only on possible leaks, but also on pressure losses, dew point losses, humidity differences, particle concentration differences, microorganism differences, and so on.

As disclosed above, according to the invention, the method further comprises the steps of:
- detecting the one or more parameters over a predefined time horizon comprising a series of snapshots;
- generating a data set comprising the sequence of snapshots;
and wherein the assessment is further done based on the data set.

The method may also generate a data set comprising several snapshots over a particular time horizon. This dataset can then be stored in a database. Subsequently, a similar dataset can be generated over the same specific time horizon and the assessment can be done by a comparison of the different datasets.

On the other hand, the assessment can also be done based on a single data set, whereby a certain trend can be derived which is an indication of the condition of the pneumatic network.

According to an embodiment, the method further comprises the steps of:
- preparing a reference data set indicative of the condition of the pneumatic network; and wherein the assessment is done by comparing the data set with the reference data set.

The reference data set may be prepared in advance, for example by a user or an administrator with knowledge of the pneumatic network. Based on characteristics of the network, the user or administrator will then draw up the reference data set, for example with the aid of a user interface, which is then representative of a performing network. The reference data set can also be drawn up based on another previously assessed network. In other words, an external dataset can then be used to assess the network. It should therefore be understood that this last option is only applicable after the method has already observed a number of snapshots at a similar other pneumatic network.

The reference data set may furthermore also be drawn up by retrieving characteristics of the pneumatic network. These characteristics may, for example, be stored as parameters and/or variables in a database with which the method can communicate.

The characteristics of the pneumatic network then comprise one of the group of a conduit diameter, a conduit length, a friction coefficient of one or more conduits, and/or the installed pneumatic and/or electrical power of the one or more compressors.

According to an embodiment, the method further comprises the step of taking corrective action based on the assessment. This corrective action includes one of the group of changing a setting of the compressor, generating an alarm signal, decreasing and/or increasing the input pressure of the pneumatic network and/or output pressure of the compressor, formulating a recommendation, such as installing an additional compressor or a compressor with a different capacity, upgrading conduit with a larger diameter, targeted sealing a leak to reduce dew point loss, replacing a filter, and/or any other corrective action that can be taken by the method to bring the pneumatic network into a desired operational condition.

According to a second aspect of the invention, a system is disclosed for assessing a condition of a pneumatic network, the system comprising a processing unit configured to perform the computer-implemented method according to the first aspect of the invention.

According to a third aspect, the invention comprises a computer program product containing computer-executable instructions for performing the method of the first aspect when this program is executed on a computer.

According to a fourth aspect, the invention comprises a computer-readable storage medium containing the computer program product according to the third aspect.

### Brief description of the drawings

The invention will now be further described with reference to the drawings in which:
Figure 1 illustrates a pneumatic network comprising two compressors and two consumers; and
Figure 2 schematically illustrates steps, performed by the computer-implemented method according to an embodiment of the invention.

### Description of Embodiments

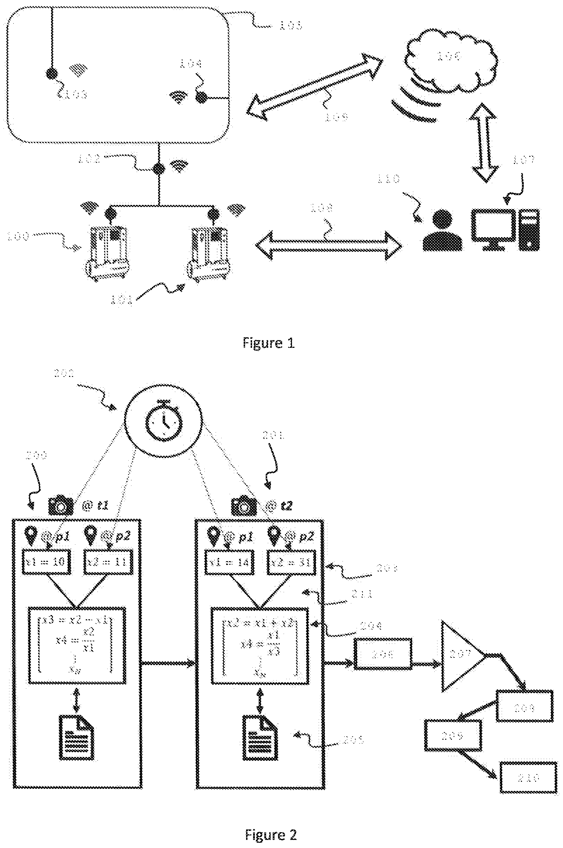

Figure 1 illustrates a compressed gas or vacuum system according to an illustrative embodiment of the invention. The pneumatic network 105 comprises two compressors 100 and 101 which are connected to the network 105 through a connection point 102. The pneumatic network 105 further comprises two consumers 103 and 104. The connection point 102 can also be regarded as a consumer, and furthermore also as a storage vessel.

The pneumatic network 105 is configured to supply the consumers 103 and 104 with compressed air, vacuum, or any other gas or liquid that can be compressed, such as oxygen, carbon dioxide, or other inert gases.

The pneumatic network 105 further comprises sensors that can measure various parameters such as, for example, a pressure, a flow rate, a dew point, humidity, temperature, and/or other parameters descriptive of the condition of the gas or vacuum. These sensors are illustrated by the dots on the consumers 103 and 104, but it should further be understood that these sensors may also be placed at other locations in the pneumatic network 105.

In this illustration, the sensors are of a wireless type and digitally transmit their measurements to a central computing unit 106, 107, but it should further be understood that they may also be of the analog type and/or wired. It is important that the measured data from these sensors can be registered and that the measurements performed at different locations can be synchronized.

Furthermore, there is a control unit that receives the measurements. This control unit can be implemented in a computer 107, for example, arranged in a control room, in the cloud 106, in a compressor 101, or optionally in a sensor 104 itself. Nevertheless, the measured data will be exchanged 108, 109 such that a user 110 may access these measurements, or at least be notified of results originating from the computer-implemented method as will be explained further.

For example, the user 110 has an interface on which the status of the pneumatic network 105 is displayed. Furthermore, recommendations may also be made to improve the efficiency and/or performance of the operation of the pneumatic network. This will be further illustrated based on Figure 2 illustrating steps performed by the computer-implemented method according to an illustrative embodiment of the invention.

A first step is the synchronous 202 measurement of the one or more parameters of the gas at at least two 102, 103, 104 distinct locations of the pneumatic network 105. With synchronous measurement 202 in meant that snapshots 200, 201 are made of the situation or condition at the two distinct locations 102, 103, 104 and that these snapshots are synchronized 202.

In addition, descriptive values, such as the operational status of the compressor and vacuum pump, the ambient pressure, absorbed electric current, a rotational speed, an (ambient) temperature, a voltage, a power, a humidity, a flow rate, a specification of the compressor or vacuum pump, if available, an activity of the one or more pneumatic consumers, or any other descriptive value that can serve as a parameter for processing by the computer-implemented method, measured and/or derived and synchronized 202.

This step of synchronized 202 measurements is repeated regularly to have a series of measurements at different operational conditions of the pneumatic network 105.

The descriptive values are illustrated by the values 205 for snapshot 201. Based on the synchronized measured quantities 203, other quantities 204 can be derived 211. These derived quantities 204 are quantities descriptive for different locations and/or their relationship in the pneumatic network 105 calculated and/or derived 211 from the synchronized measured quantities 203. These derived quantities may include pressure, flow rate, temperature, dew point, and/or energy differences, or ratios of pressure, flow rate, temperature, dew point, or other possible mathematical relationships.

In a next step, the same quantities are measured at a later point in time as in the first step and the derived quantities are also calculated as in the previous step.

After performing these second measurements, it is checked whether both sets of measurements were performed under similar conditions. This is illustrated by step 206 which illustrates a context assessment 206. This further means that with a similar operational status of the compressor or vacuum pump, an ambient pressure, absorbed electric current, a rotational speed, an (ambient) temperature, a voltage, a power, a humidity, a flow rate, a specification of the compressor, if available, and/or an activity of the one or more pneumatic consumers are similar.

If the operational status of the two measurements is sufficiently similar, then the measured and derived quantities can be compared 207 by considering their difference, ratio, and/or other mathematical relationships. If the conditions are not similar, or are not sufficiently similar to previous measurements, a new measurement is taken until the conditions are sufficiently similar. This can but does not necessarily needs to be done in real time, and also allows to compare historical data with each other until the same context 205 is obtained. Further, the current context 205 of measured data may also be compared with a context 205 of previously measured data and stored in a database.

It should be understood that a comparison 207 may also be made between the measured and derived quantities and a data set generated based on characteristics of the pneumatic network such as the conduit diameter, conduit length, friction coefficient of a conduit and the like, as well as descriptive values, such as the operational status of the compressor and vacuum pump, the ambient pressure, absorbed electric current, a rotational speed, an (ambient) temperature, a voltage, a power, a humidity, a flow rate, a specification of the compressor or vacuum pump if available, an activity of one or more pneumatic consumers, or any other descriptive value that can serve as a parameter for processing by the computer-implemented method.

In an optional step 208, a comparison 207 of the measured quantities 203 and/or derived quantities 204 can be scaled on a scale from, for example, zero to one, or any other scale that allows a comparison between the quantities. This optional step has the advantage that, independent of the type of quantity or derived quantity and physical dimensions of this quantity, the comparison can be handled in a uniform manner.

Given the magnitude of this equation 207, scaled or not, of measured quantities 203 and/or derived quantities 204, this provides a measure of the equivalence of the condition of the pneumatic network 105.

Since such assessments are made in a similar way, differences can be classified and thus an assessment can be made of the condition of the pneumatic network 105. This assessment may, for example, lead to the identification of a leak or a blockage in the pneumatic network 105. This is further illustrated as a diagnosis 209 in Figure 2.

Finally, corrective actions 210 may then be proposed that allow the user 110 to limit possible economic damage resulting from a defect. Corrective actions 210 are, for example, decreasing the system pressure, timing of compressors according to consumption, adjusting the network to decrease the pressure drop, such as increasing a conduit diameter, shutting down part of the network when not in use and/or sealing leaks.

The present invention is by no means limited to the embodiments described by way of example and shown in the figures, but such a method according to the invention for assessing a condition of a pneumatic network, a data processing device and a computer-readable storage medium may be implemented according to various modifications without departing from the scope of the invention as defined in the appended claims.

## Claims

1. A method for assessing a condition of a pneumatic network (105) comprising at least one compressor (100, 101) configured to compress a gas, and at least one pneumatic consumer (102, 103, 104), the method comprising the steps of:
- detecting one or more parameters of the gas and associated context information at at least two distinct locations (102, 103, 104) of the pneumatic network (105) and at two distinct points in time (200, 201); and
- synchronizing (202) the detection at a first (200) and second point in time (201) respectively, thereby obtaining a first and second momentarily recording, respectively, of the pneumatic network; and
- assessing the condition of the pneumatic network based on the first (200) and the second (201) momentarily recordings,
- detecting the one or more parameters and associated context information over a predefined time horizon comprising a series of momentarily recordings;
- generating a data set comprising the sequence of momentarily recordings;
and wherein the assessment is further done based on the data set.

2. The method according to claim 1, further comprising the step of:
- preparing a reference data set indicative of the condition of the pneumatic network;
and wherein the assessment is done by comparing the data set with the reference data set.

3. The method according to claim 2, further comprising the steps of:
- retrieving the characteristics of the pneumatic network;
and wherein the preparation of the reference data set is further done based on the characteristics.

4. The method according to claim 3, the characteristics comprising one of the group of:
- a conduit diameter;
- a conduit length.
- a friction coefficient of a conduit;
- an equivalent length of a conduit and/or conduit component;
- an installed power.

5. The method according to any one of the preceding claim, the one or more parameters comprising one or more of the group of:
- a pressure;
- a flow rate;
- a current density;
- a dew point;
- an humidity;
- a temperature;
- an oil concentration;
- a particle concentration;
and the associated context information comprising one or more of the group of:
- a point in time;
- a production schedule;
- a weather condition;
- a loading percentage;
- a geolocation;
- a position; and/or
- a status.

6. The method according to any one of the preceding claims, further comprising the step of:
- taking corrective action (210) based on the assessment.

7. The method according to claim 6, the corrective action comprising one of the group of:
- changing a setting of the compressor;
- generating an alarm signal;
- decreasing and/or increasing an input pressure of a pneumatic network and/or output pressure of the compressor;
- formulating a recommendation.

8. The method according to claim 7, wherein formulating a recommendation comprises:
- installing an additional compressor; and/or
- upgrading a conduit with a larger diameter; and/or
- targeted sealing a leak to reduce dew point loss; and/or
- replacing a filter.

9. System for assessing a condition of a pneumatic network, the system comprising a processing unit configured to perform the computer-implemented method according to any one of the preceding claims.

10. A computer program product containing computer-executable instructions for performing the method according to any one of claims 1 to 8 when this program is executed on a computer.

11. A computer-readable storage medium containing the computer program product according to claim 10.

## Patentansprüche

1. Verfahren zum Beurteilen eines Zustands eines pneumatischen Netzwerks (105), umfassend mindestens einen Kompressor (100, 101), der dazu konfiguriert ist, ein Gas zu komprimieren, und mindestens einen pneumatischen Verbraucher (102, 103, 104), das Verfahren, umfassend die Schritte von:
- Erfassen eines oder mehrerer Parameter des Gases und zugehöriger Kontextinformationen an mindestens zwei unterschiedlichen Orten (102, 103, 104) des pneumatischen Netzwerks (105) und zu zwei unterschiedlichen Zeitpunkten (200, 201); und
- Synchronisieren (202) der Erfassung zu einem ersten (200) bzw. einem zweiten Zeitpunkt (201), wodurch eine erste bzw. eine zweite Momentaufnahme des pneumatischen Netzwerks erhalten wird; und
- Beurteilen des Zustands des pneumatischen Netzwerks basierend auf der ersten (200) und der zweiten (201) Momentaufnahme,
- Erfassen des einen oder der mehreren Parameter und der zugehörigen Kontextinformationen über einen vordefinierten Zeithorizont, umfassend eine Reihe von Momentaufnahmen;
- Erzeugen eines Datensatzes, umfassend die Reihe von Momentaufnahmen;
und wobei die Beurteilung weiter basierend auf dem Datensatz erfolgt.

2. Verfahren nach Anspruch 1, weiter umfassen den Schritt von:
- Erstellen eines Referenzdatensatzes, der den Zustand des pneumatischen Netzwerks angibt;
und wobei die Beurteilung durch Vergleichen des Datensatzes mit dem Referenzdatensatz erfolgt.

3. Verfahren nach Anspruch 2, weiter umfassen die Schritte von:
- Abrufen der Eigenschaften des pneumatischen Netzwerks;
und wobei die Erstellung des Referenzdatensatzes weiter basierend auf den Eigenschaften erfolgt.

4. Verfahren nach Anspruch 3, die Eigenschaften umfassend eine aus der Gruppe von:
- einem Leitungsdurchmesser;
- einer Leitungslänge;
- einem Reibungskoeffizienten einer Leitung;
- einer äquivalenten Länge einer Leitung und/oder einer Leitungskomponente;
- einer installierten Leistung.

5. Verfahren nach einem der vorstehenden Ansprüche, der eine oder die mehreren Parameter, umfassend einen oder mehrere aus der Gruppe von:
- einem Druck;
- einer Durchflussrate;
- einer Stromdichte;
- einem Taupunkt;
- einer Feuchtigkeit;
- einer Temperatur;
- einer Ölkonzentration;
- einer Partikelkonzentration;
und die zugehörigen Informationen, umfassend eines oder mehrere aus der Gruppe von:
- einem Zeitpunkt;
- einem Produktionsplan;
- einer Wetterbedingung;
- einem Auslastungsgrad;
- einer Geolokalisierung;
- einer Position; und/oder
- einem Status.

6. Verfahren nach einem der vorstehenden Ansprüche, weiter umfassend den Schritt von:
- Ergreifen von Korrekturmaßnahmen (210) basierend auf der Beurteilung.

7. Verfahren nach Anspruch 6, die Korrekturmaßnahme umfassend eines aus der Gruppe von:
- Ändern einer Einstellung des Kompressors;
- Erzeugen eines Alarmsignals;
- Verringern und/oder Erhöhen eines Eingangsdrucks eines pneumatischen Netzwerks und/oder eines Ausgangsdrucks des Kompressors;
- Formulieren einer Empfehlung.

8. Verfahren nach Anspruch 7, wobei das Formulieren einer Empfehlung umfasst:
- Installieren eines zusätzlichen Kompressors; und/oder
- Aufrüsten einer Leitung mit einem größeren Durchmesser; und/oder
- gezieltes Abdichten einer Leckage, um den Taupunktverlust zu reduzieren; und/oder
- Ersetzen eines Filters.

9. System zur Beurteilung eines Zustands eines pneumatischen Netzwerks, das System, umfassend eine Verarbeitungseinheit, die dazu konfiguriert ist, das computerimplementierte Verfahren nach einem der vorstehenden Ansprüche durchzuführen.

10. Computerprogrammprodukt, enthaltend computerausführbare Anweisungen zum Durchführen des Verfahrens nach einem der Ansprüche 1 bis 8, wenn das Programm auf einem Computer ausgeführt wird.

11. Computerlesbares Speichermedium, enthaltend das Computerprogrammprodukt nach Anspruch 10.

## Revendications

1. Procédé destiné à évaluer un état d'un réseau pneumatique (105) qui comprend au moins un compresseur (100, 101) configuré pour comprimer un gaz, et au moins un consommateur pneumatique (102, 103, 104) ; dans lequel le procédé comprend les étapes au cours desquelles :
- on détermine un ou plusieurs paramètres du gaz, ainsi que des informations associées du contexte à au moins deux endroits distincts (102, 103, 104) du réseau pneumatique (105) et à deux moments distincts dans le temps (200, 201) ; et
- on synchronise (202) la détection à un premier moment (200) et à un deuxième moment (201) dans le temps, respectivement, pour ainsi obtenir un premier et un deuxième enregistrement réalisés de manière temporaire, respectivement, du réseau pneumatique ; et
on évalue l'état du réseau pneumatique en se basant sur le premier enregistrement (200) et le deuxième enregistrement (201) réalisés de manière temporaire ;
- on détecte lesdits un ou plusieurs paramètres, ainsi que les informations associées du contexte sur un horizon temporel qui a été prédéfini, qui comprend une série d'enregistrements réalisés de manière temporaire ;
- on génère un jeu de données qui comprennent la séquence d'enregistrements réalisés de manière temporaire ;
et dans lequel l'évaluation est en outre mise en œuvre sur la base du jeu de données.

2. Procédé selon la revendication 1, qui comprend en outre l'étape au cours de laquelle :
- on prépare un jeu de données de référence qui témoigne de l'état du réseau pneumatique ;
et dans lequel l'évaluation est mise en œuvre en comparant le jeu de données au jeu de données de référence.

3. Procédé selon la revendication 2, qui comprend en outre les étapes au cours desquelles :
- on extrait les caractéristiques du réseau pneumatique ;
et dans lequel la préparation du jeu de données de référence est en outre mise en œuvre en se basant sur les caractéristiques.

4. Procédé selon la revendication 3, dans lequel les caractéristiques comprennent une caractéristique qui est choisie parmi le groupe comprenant :
- un diamètre de conduit ;
- une longueur de conduit ;
- un coefficient de frottement d'un conduit ;
- une longueur équivalente d'un conduit et/ou d'un composant de conduit ;
- une puissance installée.

5. Procédé selon l'une quelconque des revendications précédentes, dans lequel lesdits un ou plusieurs paramètres comprennent un ou plusieurs paramètres qui sont choisis parmi le groupe comprenant :
- une pression ;
- un débit ;
- une densité de courant ;
- un point de rosée ;
- une humidité ;
- une température ;
- une concentration d'huile ;
- une concentration de particules ;
et dans lequel les informations associées du contexte comprennent une ou plusieurs informations qui sont choisies parmi le groupe comprenant :
- un moment dans le temps ;
- un programme de production ;
- une condition atmosphérique.
- un pourcentage de charge ;
- une géolocalisation ;
- une position ; et/ou
- un état.

6. Procédé selon l'une quelconque des revendications précédentes, qui comprend en outre l'étape au cours de laquelle :
- on prend une mesure corrective (210) en se basant sur l'évaluation.

7. Procédé selon la revendication 6, dans lequel la mesure corrective comprend une mesure qui est choisie parmi le groupe comprenant le fait :
- changer un réglage du compresseur;
- générer un signal d'alarme ;
- réduire et/ou augmenter une pression à l'entrée d'un réseau pneumatique et/ou une pression à la sortie du compresseur;
- formuler une recommandation.

8. Procédé selon la revendication 7, dans lequel la formulation d'une recommandation comprend le fait de :
- installer un compresseur supplémentaire ; et/ou
- passer à une version supérieure avec un conduit de plus grand diamètre ; et/ou
- colmater de manière ciblée une fuite afin de réduire une détérioration du point de rosée ; et/ou
- remplacer un filtre.

9. Système destiné à évaluer un état d'un réseau pneumatique, dans lequel le système comprend une unité de traitement qui est configurée pour la mise en œuvre du procédé mis en œuvre par ordinateur en conformité avec l'une quelconque des revendications précédentes.

10. Produit de programme informatique qui contient des instructions qui peuvent être exécutées par un ordinateur pour la mise en œuvre du procédé en conformité avec l'une quelconque des revendications 1 à 8, lorsque ce programme est exécuté sur un ordinateur.

11. Support de données qui peut être lu par un ordinateur, contenant le produit de programme informatique selon la revendication 10.
